# EUROPEAN PATENT APPLICATION

(11) **EP 4 530 276 A1**
(43) Date of publication of application: **02.04.2025**
(21) Application number: 24200159.2
(22) Date of filing: 13.09.2024
(51) Int. Cl.: C04B 33/04, C04B 33/132, C04B 33/14

(54) **A CLAY BODY COMPOSITION AND A METHOD FOR MANUFACTURING CERAMIC PRODUCTS**

(30) Priority: 20.09.2023 FI 20236037
(71) Applicant: Matnur Oy, 90400 Oulu (FI)
(72) Inventor: NISKANEN, Tapani, 90230 Oulu (FI); KOMULAINEN, Minna, 21130 Poikko (FI)
(74) Representative: Berggren Oy

(57) **Abstract**

The clay body composition for manufacturing ceramic products comprises clay minerals and mineral filling material, which mineral filling material includes silica and feldspar minerals. The amount of mineral filling material is at least 50 % of the dry weight of the clay body composition. The mineral filling material comprises silica 30-45 %, preferably 35-40 % of the dry weight of the mineral filling material and feldspar minerals 55-70 %, preferably 60-65 % of the dry weight of the mineral filling material. In the method for manufacturing ceramic products a clay body paste is manufactured by mixing the clay body composition with liquid.

## Description

### Technical Field

The invention relates to clay body composition for manufacturing ceramic products, which clay body composition comprises clay minerals and mineral filling material, which mineral filling material includes silica and feldspar minerals. The invention further relates to a method for manufacturing ceramic tiles using the clay body composition according to the invention.

### Background Art

Ceramic tiles are manufactured by forming fresh ceramic tiles from a clay body paste and firing the formed fresh tiles in an elevated temperature. The clay body paste is produced by mixing dry clay body composition with water. Raw materials used in the production of ceramic products comprise a mixture of some of the following components: red clays, fillers, mixed Natrium-Kalium fluxes, sodic fluxes, high plasticity ball clays, other ball clays, kaolin and possibly some additives like deflocculants, binders (bentonite) and whiting. To keep the firing costs as low as possible the tiles are fired at lowest possible temperature. However, in order to achieve a suitable strength and water absorption, a certain level of sintering must be achieved in the firing process, whereby the required firing temperature is usually above 1000 °C. Depending on clays and minerals used in the clay body composition sintering, breaking strength, water absorption and firing shrinkage vary. Therefore, every manufacturer has its' own empirically developed recipe for clay body composition for their ceramic tile products.

To enforce the idea of Circular Economy and to minimize the carbon footprint the ceramic industry aims to minimize the use of virgin raw material as well as waste output of production processes. Especially, the industrial use of the needed fluxes like feldspars is changing because of the necessity of ever more sustainable manufacturing. Ever since ceramic products have been manufactured, products have been recycled so that broken or defected items have been crushed and incorporated in the new mass forming a clay body paste. Utilizing silica and feldspar rich waste products from the mining industry as filling material has also been studied earlier. However, using silica and feldspar as a filling material in the clay body composition together with for instance glass powder has been found to significantly increase the shrinkage and water absorption. Therefore, according to the prevailing prejudice in the ceramic tile industry, silica and feldspar mine tailing minerals can be used in the clay body compositions only by small proportions as additive material, but not as main components.

An object of the invention is to provide a clay body composition, and method for manufacturing ceramic products, with which drawbacks relating to the prior art can be reduced.

The object of the invention is achieved with a clay body composition and a method, which are characterized in what is disclosed in the independent patent claims. Some preferred embodiments of the invention are disclosed in the dependent claims.

### Summary of the invention

The present invention relates to a clay body composition for manufacturing ceramic products, which clay body composition comprises clay minerals and mineral filling material including silica and feldspar minerals, the amount on mineral filling material being at least 50 % of the dry weight of the clay body composition. The mineral filling material comprises silica 30-45 %, preferably 35-40 % of the dry weight of the mineral filling material and feldspar minerals 55-70 %, preferably 60-65 % of the dry weight of the mineral filling material.

In an embodiment of the clay body composition according to the invention said feldspar minerals include 25-50 %, preferably 30-40 % Albite.

In another embodiment of the clay body composition according to the invention said feldspar minerals further include
15-25 %, preferably 18-20 % K-Feldspar and Plagioglase together,
0-10 %, preferably 3-8 % silicate minerals Muscovite and Biotite together and
0-4 %, preferably 1-3 % pyroxene mineral Spodumene of the dry weight of the mineral filling material.

In another embodiment of the clay body composition according to the invention the grain size of the mineral filling material is below 200 µm mesh, preferably between 7-125 µm mesh.

In another preferred embodiment of the clay body composition according to the invention the amount of clay minerals is 40-50 %, preferably substantially 45 % of the dry weight of the clay body composition. The clay minerals act as plasticity providers in the clay body composition.

In another preferred embodiment of the clay body composition according to the invention said clay minerals include red clay powder, preferably Finnish red clay powder and the amount of red clay powder is 15-25 %, preferably substantially 20 % of the dry weight of the clay body composition. The red clay powder is also known as earthenware powder.

In another preferred embodiment of the clay body composition according to the invention said clay minerals include kaolin, preferably Grolleg kaolin, the amount of kaolin being 20-30 %, preferably substantially 25 % of the dry weight of the clay body composition.

In another preferred embodiment of the clay body composition according to the invention said clay minerals include recycled metakaolin or bentonite.

In another preferred embodiment of the clay body composition according to the invention said mineral filling material comprises mineral waste material, preferably mine tailing material.

The method according to the invention for manufacturing ceramic products comprises steps of manufacturing a clay body paste, forming fresh ceramic product from said clay body paste and firing said fresh ceramic products in an elevated temperature. In the method the clay body paste is manufactured by mixing the clay body composition according to any of the claims 1 to 9 with liquid. The ceramic products can be tiles, dishes, sinks, toilet seats or any other product which can be made of ceramic material.

In a preferred embodiment of the method according to the invention the step of manufacturing the clay body paste comprises
- mixing a first portion of clay minerals with liquid to create a first mixture,
- allowing the first portion of clay minerals to dissolve in the first mixture for a first period of time,
- mixing the rest of the clay minerals, the first mixture and possible additional liquid to create second mixture,
- mixing the mineral filling material, the second mixture and possible additional liquid to create third mixture,
- allowing the third mixture to rest for a second period of time,
- removing excess liquid built on the surface of said third mixture
- kneading the third mixture to a clay body paste.

Kneading of the third mixture can be done manually or preferably mechanically by a suitable kneading machine.

In an embodiment of the method according to the invention said first portion of clay minerals consists essentially of red clay powder or kaolin. Kaolin is especially suitable when the colour of the final product should be light or close to white.

Preferably the clay body composition is mixed with water.

In a second preferred embodiment of the method according to the invention said fresh ceramic products are formed by pressing, extrusion or by 3D-printing.

In another preferred embodiment of the method according to the invention said fresh ceramic products are fired at a temperature of 1150-1250 °C, preferably at a temperature of 1200-1230 °C.

An advantage of an embodiment of the invention is, that it saves raw materials and environment by replacing a major part of the mineral clay materials used in ceramic tiles with waste materials, such as mine tailing.

### Brief Description of the Drawings

In the following the invention will be described in detail, by way of examples, with reference to the accompanying drawings in which,

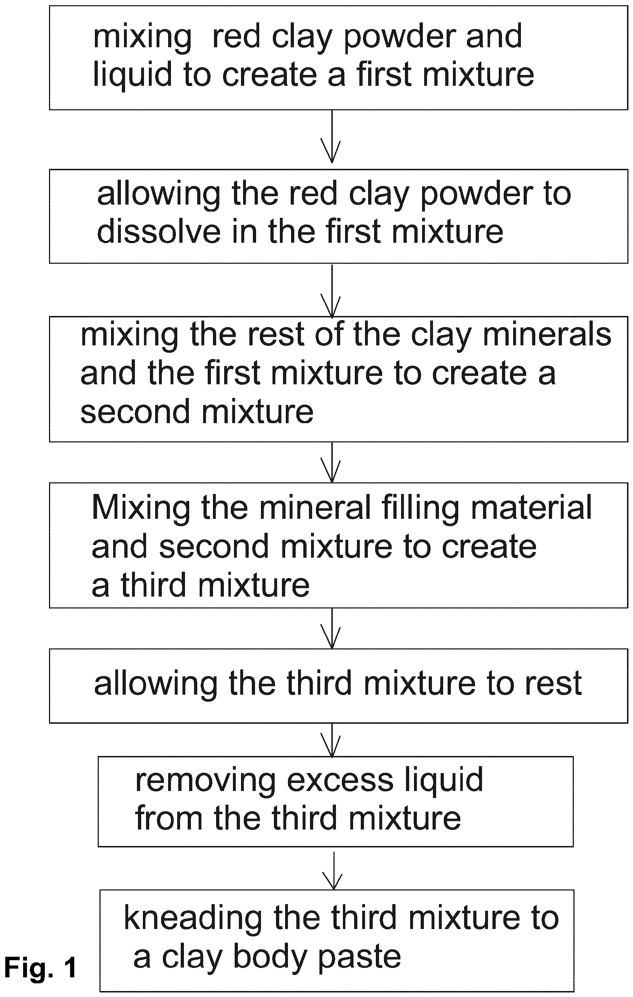

- Fig. 1: depicts an embodiment of the method according to the invention for manufacturing ceramic tiles as a flow chart.

### Detailed Description

The present invention defines a clay body composition and a method for manufacturing ceramic products from said clay body composition. In the invention silica and feldspar containing mineral filling material, especially mine tailing waste is used for manufacturing ceramic products. The manufactured products can be tiles, dishes, sinks, toilet seats or any items, which can be made of ceramic material. The mine tailing used as a mineral filling material in the invention includes following minerals
Silica 36,6 %
K-Feldspar 16,5 %
Muscovite 5,1 %
Spodumene 1,8 %
Plagioglase 2,5 %
Biotite 0,4 %
Albite 36,6 %.

The aforementioned minerals of the mine tailing comprise following chemical compositions.
SiO₂ 77,5 %
Al₂O₃ 13,8 %
Na₂O 4,81 %

The percentages express the amount of the minerals or chemical compositions of the total amount of the mineral filling material as weight-%.

Several test batches of the clay body composition were made comprising different proportions of clay minerals and mine tailing material as a mineral filling material. In the tests a viable clay body composition was developed, which composition comprises at least 50 %, preferably substantially 55 % mine tailing material. In the test batches the mine tailing material was grinded and used as such, i.e. no compounds were removed from the tailing material. The rest of the composition consists of 20 % of Finnish red clay powder and 25 % kaolin (Grolleg) of the dry weight of the composition. As silica and feldspar are the main two minerals of the mine tailing, they also are the main components of ceramic tiles manufactured form the clay body paste.

Feldspathic fluxes are essential in tile clay body as significant melting agents. In the clay body composition according to the invention, the amount of K-feldspar (potassium feldspar) is relatively high, containing microcline that is particularly important in the manufacture of ceramics. As feldspars is a group of minerals, they often come as mixtures of K- and Na -feldspars. They are often high in quartz, (silica Si0₂), which explains the high amount of it in the mine tailing (77,5%). Thus, the inventors presume that silica acts in the composition as filler and chamotte, that is used predominantly in tiles to give the clay body structure. Also, together with other oxydes, Si0₂ melts at lower melting points as usually. A eutectic solution makes also K- and Na - melt together at significantly lower temperatures than they would normally do. The sodium containing pure white feldspar Albite plays an important role in the mine tailing, as unlike K-Na -feldspars, it is low in quartz, and thus cannot be satisfactorily substitute chamotte. The fusibility of minearological compounds is an essential factor of their importance in a clay body composition. In mine tailing, the high amount (33,6 %) of Albite may explain its' fusible character.

The high content of silica in the mine tailing requires more melting agents, feldspar alone doesn't bind the particles together. A significant addition of red clay acts as a melting agent when fired to high temperatures like the 1230 C in question.

The need of fluxes is around 45-65% when fine stoneware tiles fired at ca. 1220 C, preferably sodic feldspars. When fired at higher temperatures, the need of fluxes reduces. Fluxes play a key-role in vitrified ceramic manufacturing and it is the chemical composition of the raw materials that determines the firing behavior, sintering range and pyroplasticity. According to the prevailing prejudice in the ceramic tile industry large amounts of silica and feldspar would significantly increase the shrinkage and water absorption of the clay paste making the clay paste unsuitable for manufacturing ceramic tiles. Surprisingly, in the present invention it was discovered, that more than a half of the mineral materials of the clay body composition can be replaced by a mineral filling material consisting essentially of the mine tailing. Thus, by optimizing the clay body composition it was possible to overcome the prevailing prejudice and to produce clay body composition suitable for tile manufacturing. The preferred clay body composition contains:
55 % mine tailing (75-125 mesh)
20 % Finnish red clay powder
25 % kaolin (Grolleg)

Usually, 40-50 % silica can be employed as a filler and thermal expansion regulator in the clay body composition. In the mine tailing, the extremely high amount of silica is found to perform additionally as "filler" called "chamotte" that is commonly used when manufacturing ceramic product such as tiles. Chamotte is typically made of the same clay body as the mass by drying and crushing biscuit fired mass. It is believed to be essential in tile manufacturing process because it provides the clay body the needed solidity reducing the plasticity thus drying more evenly without cracking. It also helps keep the clay body the given shape, when clay body is too plastic. However, in the invention, no chamotte was added to the clay body composition, because the excess silica gave the clay body the needed strength and solidity.

As silica is a very hard substance with a melting point of 1710 degrees Celsius, it makes clay bodies tougher and is needed for on otherwise too plastic clay bodies. It operates as a kind of a skeleton in the masses also thanks to the fact that in the sintering process some of its' particles don't dissolve as they are the last ones to dissolve in the sintering mass.

A high amount of silica weakens its' air dry strength, but on the other hand it decreases dry shrinkage, which is one of the key factors in the manufacturing process. If the clay body is too plastic, tiles warp and bend and eventually crack because in the drying process water evaporates from the sides earlier than from the middle. If chamotte or other material like silica in the invention does not give strength to the structure, the tension between the dry outer parts and moist inner parts of the tile becomes too high and tiles crack.

Red clay powder is in the clay body to give it plasticity. It is also easy and pleasant to handle. Red clay as such is a low firing material, but added in small amounts to a high firing mass, it mixes into the mass, acts as a flux and gives the clay body not only a beautiful color but also a perfect plasticity and pleasant moldability. In the developed clay body composition according to the invention, a total of 20 percent of the dry weight of the composition was red clay powder.

Like the red clay powder, kaolin (Grolleg) is used in the clay body composition to increase plasticity. Adding plastic clays into the paste slows the drying process. If tiles are fired only once (biscuit firing and glaze firing at once), this weak water absorption ability is naturally not good because the glaze is then hard to apply on the tile surface.

Kaolin is a white and very light refractory powder with a high sintering scale around 1750-1770 degrees Celsius. It is a plastic clay mineral but not a very plastic one. Should the clay body be more plastic, some other clays like ball clay or bentonite could be a better choice or a combination of them. However, kaolin being a more white powder, it was used in this mass with good results.

Silica is usually put to clay bodies sieved with a 200 mesh sieve. The mine tailing used in the test was sieved with a 75-125 micromole mesh and it made no difference. Additional tests using "mine tailing as such" with seemingly bigger particles was applicable as well. A test using "mine tailing as such", recycled metakaolin (from abroad) and Finnish earthenware powder gave promising results as well, thus not yet applicable for tile making as some binding additives would be needed.

Using recycled metakaolin instead of virgin kaolin (raw material from mine) would bring the percentage of recycled materials even higher. Metakaolin is produced in the firing process when all water evaporates from the clay body. At 1100-1200 °C the kaolin in the clay body transforms fast into mullite and the silica starts to react with the vitrified mass and dissolve into that. At the same time the feldspar starts to melt and it shrinks in volume. This is actually the starting point for vitrification. At 1200 °C feldspar has melted completely and the vitrification proceeds. Additionally, the porosity of the mass decreases significantly. After 1200 °C the mass is mostly vitrified containing mullite crystals and pores. Firing a clay body more than it's supposed to be fired may build gases adding porosity into the products.

The shrinkage of the tested clay body composition was substantially the same as in industrially manufactured tile clay bodies, namely ca. 10 %. This is important because a high shrinkage percent would create problems of by warping and breaking. Having this optimal shrinkage percentage makes tiles easy to handle and dry, which minimizes waste as well.

Official strength tests for the manufactured ceramic tiles were not made. Some of the test tiles have been glazed with an industrially made, high temperature white glaze PR5889 and the surface was extremely good.

In figure 1 an example of the manufacturing process of ceramic tiles is depicted as a flow chart.

The manufacturing process starts by making of the clay body paste by mixing first the most plastic material of the clay body composition, namely red clay powder, into water. Here, the mixture of the red clay powder and liquid is called a first mixture.

The liquid used in the first mixture can be water. Instead of or in addition to water sodium silicate can be used. The role of sodium silicate is to deflocculate the paste so that the use of very small amounts of water is possible. If a lot of water is used in the clay body paste, it creates problems of cracking and bending in the drying process. In hand made tiles as well as in industrially manufactured extruded tiles the clay body paste must be moist but not wet.

The red clay powder is allowed to dissolve in the first mixture for a first period of time, i.e. the first mixture is allowed to rest. The length of the first period of time can be 2-5 hours, preferably 3-4 hours. After that other clay minerals comprising at least kaolin was added to the first mixture and well mixed into first mixture to create a second mixture. It is possible to add more liquid to the second mixture in this stage. Finally, the mineral filling material in form of a mine tailing is carefully mixed into the second mixture to create a third mixture. Again, at this stage it is possible to add more liquid to the third mixture, if necessary. The third mixture is allowed to rest for a second period of time, whereby excess liquid rise on the surface of the third. The length of the second period of time may be from few hours up to several days depending on the amount of excess liquid in the third mixture and the type of used liquid. Preferably, the length of the second period of time is 2 to 7 days. After the second period of time the excess liquid built up on the surface of the third mixture is removed. The remaining part of the third mixture is then kneaded into a clay body paste. Kneading can be done by hand or by a suitable kneading machine.

During kneading air is removed from the paste and the paste obtains the right consistency. Removing air bubbles from the clay body paste is important, because air bubbles in the clay body would follow to the manufactured tiled causing poor quality products. Porous tiles may break easily and/or the bubbles can be seen on the surface impairing the appearance of the tiles.

After kneading, the clay body paste may be allowed to rest again for third period of time after which it is ready for tile making. The length of third period of time may be from few hours up to several days. Preferably, the length of the third period of time is 2 to 7 days.

Next, fresh ceramic tiles are formed from the clay body paste. The fresh ceramic tiles can be formed using any suitable technique or method. When testing the invention the fresh ceramic tiles were made by hand using a rolling pin and a metallic cutter. A preferable technique to consider for industrial scale tile making with the paste according to the invention would be the extrusion technique, pressing technique or 3D-printing.

Finally, the formed fresh tile is fired in a suitable oven at a high temperature. The firing temperature can be 1150-1250 °C, preferably 1200-1230 °C.

The manufacturing method according to the invention has been tested at so called mid-fired temperatures (from 1162 to 1240 degrees) and the resulting tiles mimic stoneware. By using a lower temperature the firing costs can be reduced around 30% without compromising the quality and durability. As the usual porosity frequency of wall tiles is 10%, firing at 1230 degrees instead of 1250 makes no significant difference. As even low fired (under 1200 degrees) tiles can be used in kitchens.

The test tiles manufactured using the method according to the invention have been fired at 1230 degrees resulting ca. 2 % porosity. The porosity test has been done with a simple "water glass" test where you put a tile in a glass of water overnight, and you measure the weight of the water before placing the tile into the class and after removing the tile from the class in order to see how much water the tile absorbs. In comparison with equivalent industrial tiles, these tiles therefore absorb at least three times less water and are therefore ideal even for bathroom wall tile manufacturing.

As mentioned earlier, the extreme high amount of silica replacing and acting as chamotte has added strength to the clay body paste. Further, it has reduced significantly the shrinkage, which is crucial to the whole tile manufacturing process. The amount of mineral filling material containing different feldspars (K-Feldspar, Muscovite, Plagioglase and Albite) in the clay body composition is relatively high which must have contributed to the optimal melting. It is to be noted that alumina, the Al₂O₃ content in the mineral mine tailing material is relatively high. It is an excellent alternative to silica, because it does not transform to crystalline thus there are no changes in volume. It is a very hard mineral and used in products requiring strength and thermal high compressive and mechanical strength, electrical insulation, and heat resistance. Al₂O₃ comes in different purities and also as pure white. A very good characteristic is that it shrinks less than silica does, which is one of the most important things in tile producing. Because of its' relatively expensive price it is less used than silica and thus not commonly used in clay bodies. Possibly, the over 10 % alumina has helped the clay body paste to shrink less despite its' plasticity given by red clay powder and kaolin. In addition to the actual use of mine tailing in the clay body composition, the addition of red clay powder and the high content of albite in the mine tailing adds to the innovative aspect of the invention answering the demands of today's ongoing trends.

The used mine tailing material contains also Spodumene (lithium aluminium silicate), which operates as secondary flux but as the amount of it is very small, its' importance remains insignificant.

As mentioned earlier, the red clay powder and kaolin are important components of the clay body paste giving it the needed plasticity. Red clay powder is commonly composed of 25 % of kaolin, 25 % of ball clay, 35 % of quartz, and 15 % of feldspar. As it is a secondary clay (like the stoneware clay), it has gathered in it a lot of impurities on the way.

Red clay powder can contain even 5 % of iron, whereby it is called terracotta clay. A 20 % red clay powder gives the paste a beautiful iron color. Even used without a glaze the tone is beautiful and could be used as such. Glazing with an industrially made white glaze PR5889 covers the surface yet leaving it a hunch of vivacity because of the iron content of the mass. Red clay powder lowers the melting point of the silica rich clay body paste. However, due to the high iron content, firing red clay powder alone over 1080 °C would cause decomposing. Therefore, the precise and right amount of red clay powder in the clay body composition is important. With this iron-rich clay body composition, it is possible to vitrify tiles and overcome excessive firing deformations, narrow sintering range and bloating.

In the experiments explained above ceramic tiles were made of the clay body paste. However, it is clear for a skilled person, that clay body paste is suitable also for the production of other ceramic products and items such as dishes, water basins and toilet seats for example. Further, although in the test batches a substantial amount of red clay powder was used, the inventor knows, that the red clay powder could be replaced with other clay mineral, such as kaolin. In such case, the amount of kaolin would naturally not be equal to the amount of red clay as red clay works efficiently as a melting agent. Then, the exact amount of QFS and possible additional melting agent feldspar should be recalculated.

Some preferred embodiments of the invention have been disclosed above. The invention is not limited to the solutions explained above, but the invention can be applied in different ways within the limits set by the patent claims.

## Claims

1. A clay body composition for manufacturing ceramic products, which clay body composition comprises clay minerals and mineral filling material including silica and feldspar minerals, the amount on mineral filling material being at least 50 % of the dry weight of the clay body composition, **characterized in that** said mineral filling material comprises silica 30-45 %, preferably 35-40 % of the dry weight of the mineral filling material and feldspar minerals 55-70 %, preferably 60-65 % of the dry weight of the mineral filling material.

2. A clay body composition according to claim 1, **characterized in that** that said feldspar minerals include 25-50 %, preferably 30-40 % Albite.

3. A clay body composition according to claim 1 or 2, **characterized in that** said feldspar minerals further include
15-25 %, preferably 18-20 % K-Feldspar and Plagioglase together,
0-10 %, preferably 3-8 % Muscovite and Biotite together and
0-4 %, preferably 1-3 % Spodumene of the dry weight of the mineral filling material.

4. A clay body composition according to any of the claims 1 to 3, **characterized in that** the grain size of the mineral filling material is below 200 µm mesh, preferably between 7-125 µm mesh.

5. A clay body composition according to any of the claims 1 to 4, **characterized in that** the amount of clay minerals is 40-50 %, preferably substantially 45 % of the dry weight of the clay body composition.

6. A clay body composition according to any of the claims 1 to 5, **characterized in that** said clay minerals include red clay powder, preferably Finnish red clay powder and the amount of red clay powder is 15-25 %, preferably substantially 20 % of the dry weight of the clay body composition.

7. A clay body composition according to any of the claims 1 to 6, **characterized in that** said clay minerals include kaolin, preferably Grolleg kaolin, and the amount of kaolin is 20-30 %, preferably substantially 25 % of the dry weight of the clay body composition.

8. A clay body composition according to any of the claims 1 to 7, **characterized in that** said clay minerals include recycled metakaolin or bentonite.

9. A clay body composition according to any of the claims 1 to 8, **characterized in that** said mineral filling material comprises mineral waste material, preferably mine tailing material.

10. A method for manufacturing ceramic products, the method comprising steps manufacturing a clay body paste, forming fresh ceramic tiles from said clay body paste and firing said fresh ceramic products in an elevated temperature, **characterized in that** the clay body paste is manufactured by mixing the clay body composition according to any of the claims 1 to 9 with liquid.

11. A method according to claim 10, **characterized in that** the step of manufacturing the clay body paste comprises
- mixing a first portion of clay minerals with liquid to create a first mixture,
- allowing the first portion of clay minerals to dissolve in the first mixture for a first period of time,
- mixing the rest of the clay minerals, the first mixture and possible additional liquid to create second mixture,
- mixing the mineral filling material, the second mixture and possible additional liquid to create third mixture,
- allowing the third mixture to rest for a second period of time,
- removing excess liquid built on the surface of said third mixture and
- kneading the third mixture to a clay body paste.

12. A method according to claim 11, **characterized in that** said first portion of clay minerals consists essentially of red clay powder or kaolin.

13. A method according to any of the claims 10 to 12, **characterized in that** the clay body composition is mixed with water.

14. A method according to any of the claims 10 to 13, **characterized in that** said fresh ceramic products are formed by extrusion, pressing or by 3D-printing.

15. A method according to any of the claims 10 to 14, **characterized in that** said fresh ceramic products are fired at a temperature of 1150-1250 °C, preferably at a temperature of 1200-1230 °C.
